# EUROPÄISCHE PATENTSCHRIFT

(11) **EP 0 701 469 B1**
(45) Veröffentlichungstag und Bekanntmachung des Hinweises auf die Patenterteilung: **12.03.1997**
(21) Anmeldenummer: 94918814.8
(22) Anmeldetag: 28.05.1994
(51) Int. Cl.: B01D 53/04, F16K 11/076

(54) **DREHSCHIEBER**
ROTARY SLIDE VALVE
TIROIR ROTATIF

(30) Priorität: 01.06.1993 DE 4318203
(43) Veröffentlichungstag der Anmeldung: 20.03.1996
(73) Patentinhaber: PPV-VERWALTUNGS-AG, 8032 Zürich (CH); DRÄGERWERK AKTIENGESELLSCHAFT, D-23558 Lübeck (DE)
(72) Erfinder: PÖSCHL, Günter, D-71409 Schwaikheim (DE); DEGENHARDT, Detlev, D-23558 Lübeck (DE)
(74) Vertreter: Menges, Rolf, Dipl.-Ing.
(86) Internationale Anmeldenummer: EP9401746
(87) Internationale Veröffentlichungsnummer: WO9427708

(56) Entgegenhaltungen:
- EP-A- 0 525 521
- DE-A- 2 214 662
- US-A- 4 272 265
- US-A- 4 968 334

## Beschreibung

### Technisches Gebiet

Die Erfindung betrifft einen Drehschieber nach dem Oberbegriff des Anspruchs 1.

### Stand der Technik

Ein derartiger Drehschieber ist bereits aus der DE-OS 25 56 097 bekannt und wird als Steuerorgan bei einem adsorptiven Druckwechsel-Verfahren verwendet, das zur Sauerstoffanreicherung von Luft dient. Zwei jeweils ein Zeolith-Festbett enthaltende Behälter werden dabei wechselweise mit Druckluft beaufschlagt, wobei im gerade zugeschalteten Behälter das Zeolith-Festbett den in der Druckluft vorhandenen Stickstoff adsorbiert, so daß sauerstoffangereicherte Luft dieses Zeolith-Festbett verläßt. Während der zugeschaltete Behälter sauerstoffangereicherte Luft produziert, wird der andere Behälter entspannt und wird das im Zeolith-Festbett gebundene Gas desorbiert. Eine Desorption ist notwendig, weil das Adsorptionsvermögen eines Zeolith-Festbettes beschränkt ist, so daß nach einer Adsorption eine Desorptionsphase folgen muß. Die Desorption des Zeolith-Festbettes steuert der bekannte Drehschieber so, daß zusätzlich zur Entspannung durch Einleiten von produzierter sauerstoffangereicherter Luft in das Zeolith-Festbett dieses gespült wird und der an dem Zeolith-Festbett angelagerte Stickstoff freigesetzt wird. Der bekannte Drehschieber steuert die Zufuhr der Druckluft, die Abgabe des freigewordenen Stickstoffs sowie die Zufuhr von sauerstoffangereicherter Luft als Spülluft. Der Drehschieber besteht dabei aus vier Steuerscheiben, die zahlreiche Nuten und Bohrungen besitzen. Der Nachteil dieses bekannten Drehschiebers besteht in der komplizierten und aufwendigen Anordnung von mehreren hintereinander geschalteten Steuerscheiben mit komplizierten Nutenformen.

Aus der DE-AS 15 44 036 ist eine Vorrichtung zur selektiven Adsorption von Gasbestandteilen bekannt, in der über eine Flachschiebersteuerung mit Adsorptionsmittel gefüllte Behälter wechselweise zugeschaltet werden. Diese Flachschiebersteuerung besteht aus zwei Paaren von Lochplatten, wobei jedes Paar aus einer feststehenden und einer sich drehenden Lochplatte besteht. Im Gegensatz zu Drehschiebern, die ein in einem Gehäuse rotierendes zylindrisches Teil aufweisen, welches an der Stirn- und an der Mantelfläche Ausnehmungen zum Steuern von Gasströmen hat, besteht eine Flachschiebersteuerung aus besonders ebenen aufeinanderliegenden Lochplatten, welche an ihrer Ober- und Unterseite Nuten oder durchgehende Bohrungen besitzen. Zwischen den beiden Lochplattenpaaren sind zwei mit Adsorptionsmittel gefüllte Behälter angeordnet, die zur Aufnahme von in Luft enthaltenem Wasserdampf dienen. Die beiden Behälter sind mit den drehbaren Lochplatten verbunden und werden über einen Antrieb gedreht. Je nach Stellung der Lochplatten ergibt sich dabei eine Adsorption oder eine Desorption in den Behältern, wobei die Desorption in diesem Fall eine Trocknung der Behälter ist. Die feststehenden Lochplatten besitzen zwei Steuerschlitze, die jeweils die Form eines Kreisringabschnitts haben. Da sich ein Steuerschlitz über mehr als 180° erstreckt, ist eine Stellung möglich, bei der beide Behälter gleichzeitig adsorbieren. Die Dauer der Adsorptionsphase gegenüber der Desorptionsphase wird dadurch verlängert. Dieser Flachschieber kann somit ausschließlich bei Verfahren verwendet werden, bei denen Wasserdampf aus Luft ausgeschieden wird, da es nur bei derartigen Verfahren möglich ist, innerhalb kürzester Zeit das Adsorptionsmittel durch Einleitung von Luft mit sehr hohen Temperaturen zu desorbieren. Bei Adsorptionsmitteln wie beispielsweise Zeolith in Festbetten, bei denen eine schnelle Desorption nicht möglich ist, ist dieser bekannte Flachschieber nicht verwendbar, da er zu einer unvollständigen Desorption der Zeolith-Festbetten führen würde. Nachteilig ist bei dieser bekannten Vorrichtung auch, daß nicht nur zwei Lochplatten, sondern auch die zwischen ihnen angeordneten Behälter gedreht werden müssen. Bei großen, schweren Behältern ist diese Vorrichtung damit kaum verwirklichbar.

Eine weitere Vorrichtung zur selektiven Adsorption von Gasgemischen mit einer Flachschiebersteuerung ist aus der DE 32 38 969 A1 bekannt. Diese Flachschiebersteuerung besteht dabei u.a. aus einer feststehenden und einer drehbaren Steuerscheibe. Die feststehende Steuerscheibe hat über entsprechende Bohrungen und Leitungen Verbindungen zu Ein- und Auslässen von mehreren wechselweise adsorbierenden Behältern. Die Steuerscheiben besitzen eine Vielzahl von Nuten und Bohrungen, über die je nach Stellung der drehbaren Scheibe die Adsorptions- und Desorptionsphasen der Behälter gesteuert werden. Zusätzlich sind auch Bohrungen vorgesehen, die es ermöglichen, zwischen der Desorptions- und der Adsorptionsphase eine Druckerhöhung oder zusätzlich einen Spülvorgang in dem gerade desorbierten Behälter auszuführen, indem aus einem Zwischenbehälter unter Druck stehende sauerstoffangereicherte Luft in den gerade desorbierten Behälter einströmen kann. Diese bekannte Flachschiebersteuerung ist sehr aufwendig wegen der zahlreichen Nuten und Bohrungen des vorgesehenen Zwischenspeichers und wegen zahlreicher Rückschlagventile, die das Ausströmen von sauerstoffangereicherter Luft aus einem zusätzlichen Speicher für das produzierte Gas vermeiden sollen.

Aus der EP 512 534 A1 ist ebenfalls eine Vorrichtung zur selektiven Adsorption von Gasgemischen mit einer Flachschiebersteuerung bekannt. Ein mit Adsorptionsmittel gefüllter zylindrischer Behälter ist dabei aber in mehrere voneinander getrennte Segmente unterteilt, welche abwechselnd Adsorptions- und Desorptionsphasen durchlaufen. Der Flachschieber steuert dabei pro Segment zwei Gasströme mit entsprechenden Bohrungen und Nuten durch feststehende und drehbare Steuerscheiben.

Aus der GB 21 90 014 A ist eine Vorrichtung zur Adsorption von Gasbestandteilen mit zwei wechselweise arbeitenden Zeolith-Behältern vorgesehen, wobei zwei Drehschieber vorhanden sind, die Gaseinlaß, -auslaß und Spülvorgang steuern. Die beiden Drehschieber sind dabei an einen gemeinsamen Drehantrieb gekoppelt. Bei dieser Vorrichtung führen zwei Drehschieber und zusätzlich auch ein Rückschlagventll, welches ein Rückströmen von Produktgas in Leitungen verhindert, zu erhöhtem Fertigungsaufwand.

Aus der GB 20 33 777 A ist eine aufwendige Vorrichtung zum Trennen von Sauerstoff und Stickstoff aus Luft bekannt. Dabei werden die Gasströme aus und zu acht mit Adsorptionsmittel gefüllten Behältern über einen gemeinsamen Flachschieber gesteuert. Die Behälter werden dabei teilweise in Reihe geschaltet, und es ist eine aufwendige Prozedur zur Desorption der Behälter vorgesehen. In einer Phase werden die Behälter dazu mit einer Vakuumquelle verbunden, und in einer anderen Phase wird zusätzlich reiner Stickstoff in die Behälter eingeleitet, um restlichen Sauerstoff aus dem Behälter zu spülen. Diese bekannte Vorrichtung samt Flachschieber ist sehr aufwendig.

Die US 50 71 453 zeigt eine Anlage zum Erzeugen von sauerstoffangereicherter Luft mit zwei wechselweise arbeitenden Molekularbetten, die über einen einfachen Drehschieber wechselweise mit Druckluft beschickt werden. Zur Desorption wird dabei erzeugtes Produktgas in das gerade zu desorbierende Molekularbett eingeleitet. Die bekannte Anlage ist dabei zur Gewinnung von sauerstoffangereicherter Luft für die Besatzung eines Flugzeuges vorgesehen, wobei die Anlage insbesondere in Notfallsituationen in großen Höhen sauerstoffangereicherte Luft produziert.

Die US 51 12 367 zeigt ebenfalls eine Vorrichtung zur Erzeugung von sauerstoffangereicherter Luft mit mehreren Zeolith-Festbetten, die über einen Drehschieber mit Druckluft beschickt werden, wobei das Produktgas in einen Produktgasspeicher geleitet wird. In der Desorptionsphase wird aus diesem Speicher Produktgas zum Spülen der Zeolith-Festbetten entnommen. Der bekannte Drehschieber steuert dabei den zugeführten Druckluftstrom und den Strom an aus den Zeolith-Festbetten ausströmendem Gas zum Spülen der Festbetten.

### Darstellung der Erfindung

Aufgabe der Erfindung ist es, einen Drehschieber nach dem Oberbegriff des Anspruchs 1 so zu gestalten, daß er mit möglichst wenigen beweglichen Bauteilen eine Vielzahl von gasführenden Leitungen gesteuert öffnen und schließen kann und er bei Verwendung in einer Sauerstoffanreicherungsanlage eine Kontamination von sauerstoffangereicherter Luft verhindert.

Die Aufgabe wird erfindungsgemäß durch die Merkmale des Anspruchs 1 gelöst.

Dadurch, daß der erfindungsgemäße Drehschieber zumindest zwei ausschließlich als Sauerstoffeinlaßöffnungen dienende Öffnungen und zwei diesen zugeordnete, gegenüberliegende, ausschließlich als Sauerstoffauslaßöffnungen dienende Öffnungen umfaßt, ist eine vollständige Steuerung des Auslasses von sauerstoffangereicherter Luft möglich. Dadurch, daß der erfindungsgemäße Drehschieber sämtliche Öffnungen und Ausnehmungen zum Steuern der Druckluft und Stickstoffströme an Mantelflächen des Drehschiebers und Öffnungen und Ausnehmungen zum Leiten von Sauerstoffströmen an stirnseitigen Flächen vorgesehen hat, sind die Sauerstoffströme räumlich deutlich von den übrigen Gasströmen getrennt, so daß Leckströme, die zur Kontamination des produzierten Sauerstoffs führen, verhindert werden. Treten Undichtigkeiten an den Mantelflächen des Schieberkörpers und des Gehäuses auf, so sind noch immer die eng aneinanderliegenden stirnseitigen Flächen von Schieberkörper und Gehäuse vorhanden, die ein Einströmen von Druckluft oder Stickstoff in die sauerstofführende Ausnehmungen und Öffnungen verhindern. Der erfindungsgemäße Drehschieber steuert mit Hilfe nur eines einzigen beweglichen Bauteils zwei getrennte Sauerstoffströme unabhängig von Druckluft- und Stickstoffströmen.

Bei dem bekannten Drehschieber nach der DE-OS 25 56 097 ist es dagegen nur möglich, einen Sauerstoffstrom in beschränktem Umfang zu steuern. Der bekannte Drehschieber hat dabei zwei Öffnungen, die beide stets gleichzeitig offen oder geschlossen sind. Dies hat den Zweck, bei Vorrichtungen zur Sauerstoffanreicherung von Luft, die mit zwei wechselweise arbeitenden Behältern arbeiten, den Strom von produzierter, sauerstoffangereicherter Luft kurzzuschließen, um für einen Druckausgleich zu sorgen.

Vorteilhafte Ausgestaltungen der Erfindung bilden Gegenstände der Unteransprüche 2 bis 15.

Vorteilhafte Verwendungen des Drehschiebers bilden die Gegenstände der Unteransprüche 16 und 17. Dabei ist gemäß Anspruch 16 der Drehschieber Teil einer Anlage zur Sauerstoffanreicherung von Luft durch selektive Adsorption von Luftbestandteilen mit zumindest zwei wechselweise arbeitenden, mit Adsorptionsmittel gefüllten Behältern. Der Drehschieber steuert dabei sämtliche Druckluftströme, Stickstoffströme und Ströme von sauerstoffangereicherter Luft. Bei dem Drehschieber nach der DE-OS 25 56 097 und der Vorrichtung nach der DE 32 38 959 A1 sind jeweils mehrere Rückschlagventile an Einlässen zu einem Speicher für das produzierte Gas vorgesehen, um ein Rückströmen von produziertem Gas zu vermeiden. Durch den erfindungsgemäßen Drehschieber sind diese Rückschlagventile nicht mehr nötig, da die Sauerstoffeinlaßöffnungen des Drehschiebers mit den Behälterauslässen und die Sauerstoffauslaßöffnungen des Drehschiebers mit einem Sauerstoffspeicher verbunden sind. Da der erfindungsgemäße Drehschieber zwischen den Behältern und dem Sauerstoffspeicher angeordnet ist, wirkt er selbst als Rückschlagventil.

Gerade bei großen Behältern können gemäß Anspruch 17 auch noch zusätzliche Unterdruckleitungen vorgesehen sein, über welche aus Bereichen in den Behältern, welche wegen ihrer Entfernung zu den Druckluftauslaßöffnungen schlecht desorbiert werden, Stickstoff abgeführt werden kann. Um ein unerwünschtes Durchströmen von Druckluft bei der Adsorption zu vermeiden, können in den Unterdruckleitungen Rückschlagventile vorgesehen sein.

### Kurze Beschreibung der Zeichnungen

Ausführungsbeispiele der Erfindung werden im folgenden unter Bezugnahme auf die Zeichnungen näher beschrieben. Es zeigen:
- Fig. 1a: einen Querschnitt durch den erfindungsgemäßen Drehschieber,
- Fig. 1b: eine schematische Ansicht einer Anlage zur Sauerstoffanreicherung von Luft mit dem erfindungsgemäßen Drehschieber,
- Fig. 1c: eine weitere vorteilhafte Anlage zur Sauerstoffanreicherung von Luft mit einer weiteren Ausführungsform des erfindungsgemäßen Drehschiebers,
- die Fig. 2a bis 2d: Schnittansichten nach der Linie II-II in Fig. 1a, in der durch vier aufeinanderfolgende Arbeitsstellungen eines Schieberkörpers die Steuerung von Druckluft- und Stickstoffströmen gezeigt ist,
- die Fig. 3a bis 3h: Schnittansichten nach der Linie III-III in Fig. 1a, in der durch acht aufeinanderfolgende Arbeitsstellungen die Steuerung von Druckluft- und Stickstoffströmen und von Strömen von sauerstoffangereicherter Luft gezeigt sind,
- Fig. 4: eine Draufsicht auf den erfindungsgemäßen Drehschieber mit einem Kurbelantrieb als zusätzliche Ausgestaltung und
- Fig. 5: eine Schnittansicht der nach der Linie V-V in Fig. 4.

### Bester Weg zur Ausführung der Erfindung

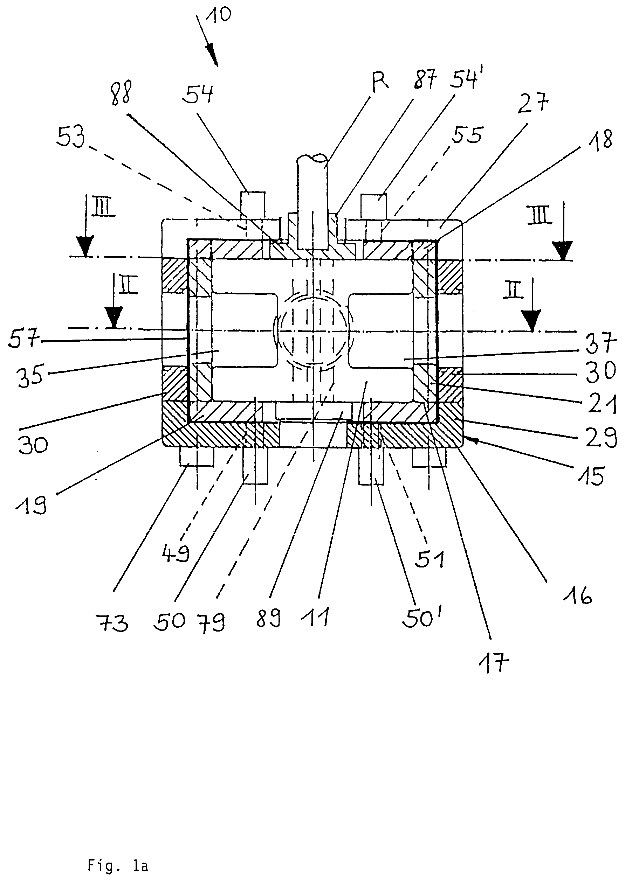

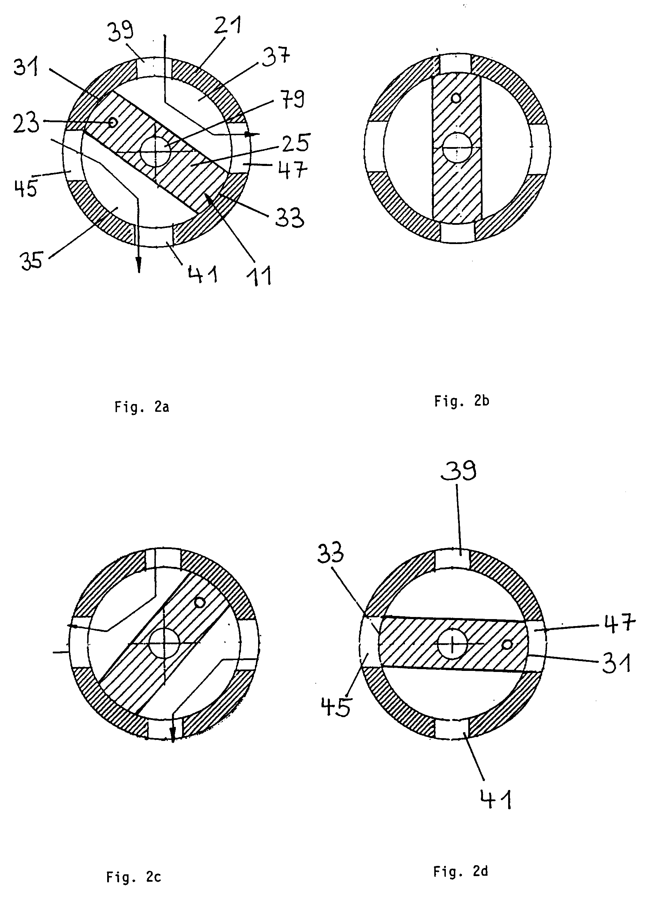

Fig. 1a zeigt einen Drehschieber 10, der im wesentlichen aus einem zylindrischen Schieberkörper 11, welcher in einem ringförmigen Gehäuse 15 angeordnet ist, und einem Drehantrieb R besteht. Vom Drehantrieb R ist lediglich eine Motorwelle gezeigt. Das Gehäuse 15 hat ein Außengehäuse 16 und ein Innengehäuse 17. Das Innengehäuse 17 umgibt den Schieberkörper 11 und umfaßt eine Gleitlagerbuchse 21 sowie einen oberen und einen unteren Gleitlagerring 18 bzw. 19, welche an die Gleitlagerbuchse 21 stirnseitig angrenzen. Dadurch wird der Schieberkörper 11 in axialer und radialer Richtung durch das Innengehäuse 17 begrenzt, wobei der Schieberkörper 11 ein geringes axiales und radiales Spiel zu dem Innengehäuse 17 aufweist. Die Gleitlagerringe 18, 19 sind durch das Außengehäuse 16 gegen die Gleitlagerbuchse 21 in axialer Richtung verspannt und dadurch in ihrer Lage fixiert. Das Außengehäuse 16 besteht aus einem oberen und unteren Deckel 27 bzw. 29 und einer dazwischen liegenden Ringbuchse 30, welche in radialer Richtung an der Gleitlagerbuchse 21 anliegt. Durch mehrere Schrauben 73 ist der obere Deckel 27 gegenüber dem unteren Deckel 29 axial so verspannt, daß damit auch die Gleitlagerringe 18, 19 fixiert sind. Der Schieberkörper 11, der obere und untere Gleitlagerring 18, 19 sowie die Gleitlagerbuchse 21 sind jeweils aus keramischem Material hergestellt. Die Verwendung von Keramikbauteilen hat den Vorteil, daß bei sehr geringem Reibungskoeffizienten eine höchstmögliche Dichtigkeit der aufeinander gleitenden Bauteile gegeben ist, insbesondere hinsichtlich der Abtrennung der sauerstoffführenden von den druckluft- bzw. stickstoffführenden Leitungen. Der obere und untere Deckel 27, 29 und die Ringbuchse 30 bestehen aus Metall. Wegen der unterschiedlichen Wäremausdehungskoeffizienten von Keramik und Metall würde sich das Innengehäuse 17 bei Temperaturänderungen anders als das Außengehäuse 16 dehnen, und, falls ein zu geringes radiales Spiel zwischen Außen- und Innengehäuse 16, 17 vorhanden wäre, würden die keramischen Teile zerbersten. Um die Gefahr des Zerberstens auszuschalten, ist zwischen der Gleitlagerbuchse 21 und der Ringbuchse 30 sowie zwischen dem oberen und unteren Gleitlagerring 18, 19 und dem oberen und unteren Deckel 27, 29 eine elastische Dichtung 57 vorgesehen, die unterschiedliche Längenänderungen bei Temperaturänderungen von sämtlichen Teilen kompensiert. Das Gehäuse 15 hat vier radiale Öffnungen, welche in Fig. 2 besser zu erkennen sind und im folgenden noch näher erläutert werden. Der Schieberkörper 11 hat eine zentrische Aufnahmebohrung 79 sowie an seiner Mantelfläche zwei gegenüberliegende nutenförmige Ausnehmungen 35 und 37, die axial in Höhe von radialen Öffnungen, die noch genauer beschrieben werden, im Gehäuse 15 angeordnet sind. Der Schieberkörper 11 ist über ein Drehteil 87 mit dem Drehantrieb R verbunden. Das Drehteil 87 hat einen oberen und einen sich durch die zentrische Aufnahmebohrung 79 hindurch erstreckenden Schaft, an dessen unterem Ende sich ein Gewinde anschließt, auf welches eine Mutter 89 geschraubt ist. Die Mutter 89 liegt an einer unteren Stirnseite des Schieberkörpers 11 an, und ein Bund 88 des Drehteils 87 liegt an einer oberen Stirnseite des Schieberkörpers 11 an. Durch Anziehen der Mutter 89 wird der Schieberkörper 11 gegen den Bund 88 gepreßt und somit axial fixiert. Das Drehteil 87 hat eine axiale Bohrung, in die die Motorwelle des Drehantriebs R eingepreßt ist. Im unteren Deckel 29 sind vier Sauerstoffeinlaßanschlüsse vorgesehen, von denen nur zwei, nämlich die Sauerstoffeinlaßanschlüsse 50 und 50' gezeigt sind. Die Sauerstoffeinlaßanschlüsse 50, 50' stehen in Verbindung mit den Sauerstoffeinlaßöffnungen 49 bzw. 51 im Gehäuse 15, von denen nur zwei gezeigt sind. Der obere Deckel 27 hat zwei Sauerstoffauslaßanschlüsse 54, 54', die in Verbindung mit je zwei Sauerstoffauslaßöffnungen 53, bzw. 55 im Gehäuse 15 stehen, von denen nur jeweils eine gezeigt ist.

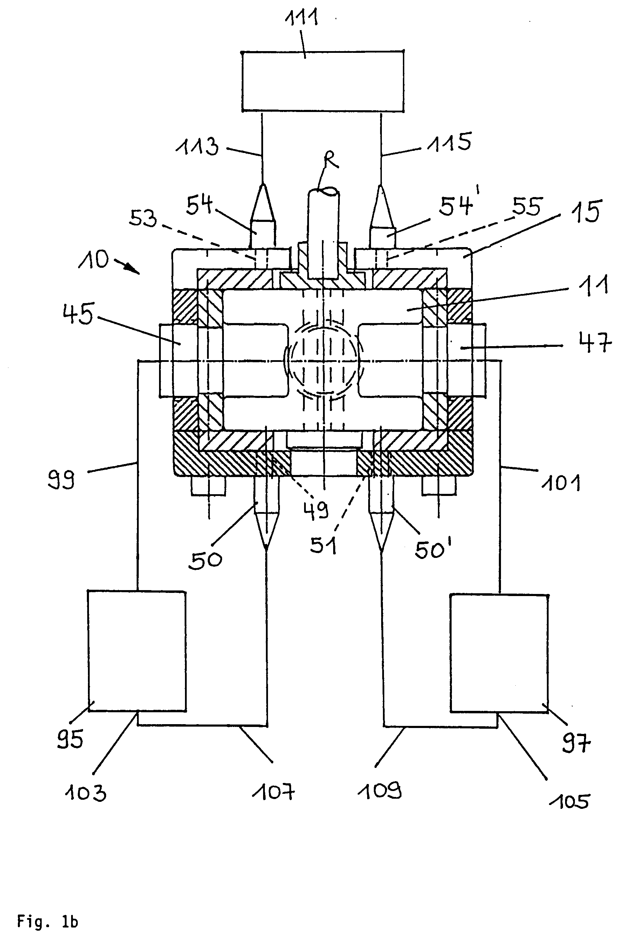

Der in Fig. 1a gezeigte Drehschieber 10 ist in eine Anlage zur Sauerstoffanreicherung von Luft eingebaut, wie es schematisch in Fig. 1b gezeigt ist. Die in Fig. 1a verwendeten Bezugszahlen sind, soweit nötig, entsprechend auch in Fig. 1b angegeben. Die Anlage zur Sauerstoffanreicherung von Luft besteht im wesentlichen aus dem Drehschieber 10, einem ersten und einem zweiten Behälter 95, 97, die beide mit einem Zeolith-Festbett gefüllt sind, und einem Sauerstoffspeicher 111 für sauerstoffangereicherte Luft. Der erste Behälter 95 ist durch eine Leitung 99 mit einer radialen Druckluftauslaßöffnung 45 im Gehäuse 15 des Drehschiebers 10 verbunden. Die Druckluftauslaßöffnung 45 dient, wie im folgenden noch näher erläutert wird, auch als Stickstoffeinlaßöffnung. Der erste Behälter 95 hat an seiner Unterseite einen Behälterauslaß 103 für sauerstoffangereicherte Luft, im folgenden kurz Behälterauslaß 103 für Sauerstoff genannt. Da die in Fig. 1b gezeigte Anlage Luft so stark mit Sauerstoff anreichert, daß die sauerstoffangereicherte Luft fast ausschließlich aus Sauerstoff besteht, wird zur Vereinfachung im folgenden anstatt von sauerstoffangereicherter Luft von Sauerstoff gesprochen. Der Behälterauslaß 103 für Sauerstoff ist durch eine Leitung 107 mit dem ersten Sauerstoffeinlaßanschluß 50 des Drehschiebers 10 verbunden. Der Sauerstoffauslaßanschluß 54 des Drehschiebers 10 ist über eine Leitung 113 mit dem Sauerstoffspeicher 111 verbunden. Der zweite Behälter 97 wiederum ist über eine Leitung 101 mit einer weiteren Druckluftauslaßöffnung 47 im Gehäuse 15 verbunden. Die weitere Druckluftauslaßöffnung 47 ist ebenfalls als radiale Bohrung ausgebildet und liegt der Druckluftauslaßöffnung 45 diametral gegenüber. Ein Behälterauslaß 105 für Sauerstoff des zweiten Behälters 97 ist über eine Leitung 109 mit einem zweiten Sauerstoffeinlaßanschluß 50' verbunden und der zweite Sauerstoffauslaßanschluß 54' ist über eine Leitung 115 mit dem Sauerstoffspeicher 111 verbunden. Die Anlage ist damit bezüglich ihrer beiden Behälter 95, 97 symmetrisch aufgebaut.

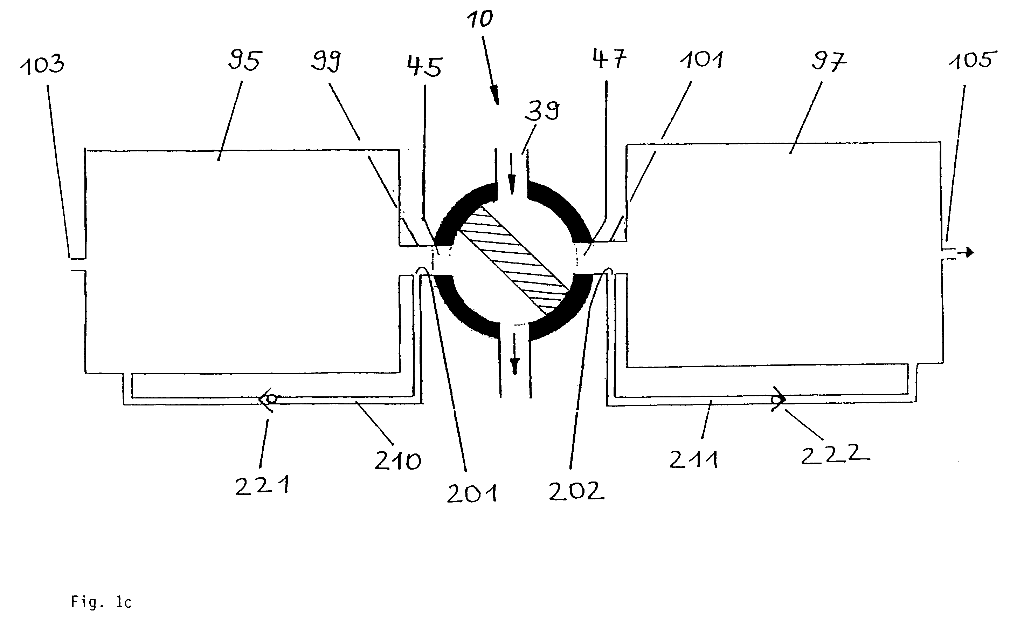

In den Fig. 2a bis 2d sind der Schieberkörper 11 und die Gleitlagerbuchse 21 gezeigt. Der Schieberkörper 11 ist dabei in vier aufeinanderfolgenden Winkelstellungen gezeigt. Sämtliche in den vorangegangenen Figuren bereits erläuterte Teile tragen die bereits eingeführten Bezugszahlen. Die Gleitlagerbuchse 21 hat neben den Druckluftauslaßöffnungen 45 und 47 eine Drucklufteinlaßöffnung 39 und eine Stickstoffauslaßöffnung 41, welche als radiale, sich paarweise diametral gegenüberliegende Bohrungen ausgebildet sind und sich auch durch das Außengehäuse 16 entsprechend erstrecken. Die Drucklufteinlaßöffnung 39 und die Stickstoffauslaßöffnung 41 sind um annähernd 90° winkelversetzt zu den Druckluftauslaßöffnungen 45, 47 angeordnet. Der Schieberkörper 11 ist zylinderförmig und hat, wie anhand von Fig. 1 schon erläutert worden ist, zwei Ausnehmungen 35, 37 und einen dazwischen liegenden stegförmigen Teil 25. An seinem Umfangsabschnitt hat der Schieberkörper 11 zwei diametral gegenüberliegende Steuerflächen 31, 33. Im stegförmigen Teil 25 ist eine Ausnehmung 23 in Form einer axial durch den Schieberkörper 11 hindurchgehenden Bohrung vorgesehen, die radial zwischen der zentrischen Aufnahmebohrung 79 und der Steuerfläche 31 angeordnet ist. Die Drucklufteinlaßöffnung 39 und die Stickstoffauslaßöffnung 41 sind im Querschnitt vorzugsweise jeweils kleiner als die Druckluftauslaßöffnungen 45, 47 ausgebildet, um einen schnelleren Druckabfall im zu desorbierenden Behälter, wie im folgenden noch erklärt werden wird, zu erreichen. Darüber hinaus ist es jedoch auch möglich, die Druckluftauslaßöffnungen 45, 47 so groß wie die Drucklufteinlaß- und die Stickstoffauslaßöffnung 39 bzw. 41 auszubilden. Die Steuerflächen 31, 33 dagegen sind so groß ausgebildet, daß sie in einer ersten Absperrstellung, die in Fig. 2b gezeigt ist, die Drucklufteinlaßöffnung 39 und die Stickstoffauslaßöffnung 41 sowie in einer zweiten Absperrstellung, die in Fig. 2d gezeigt ist, die Druckluftauslaßöffnungen 45, 47 vollständig verschließen. Je nach Stellung des Schieberkörpers 11 ergeben sich damit verschiedene Strömungsverbindungen zwischen den Öffnungen.

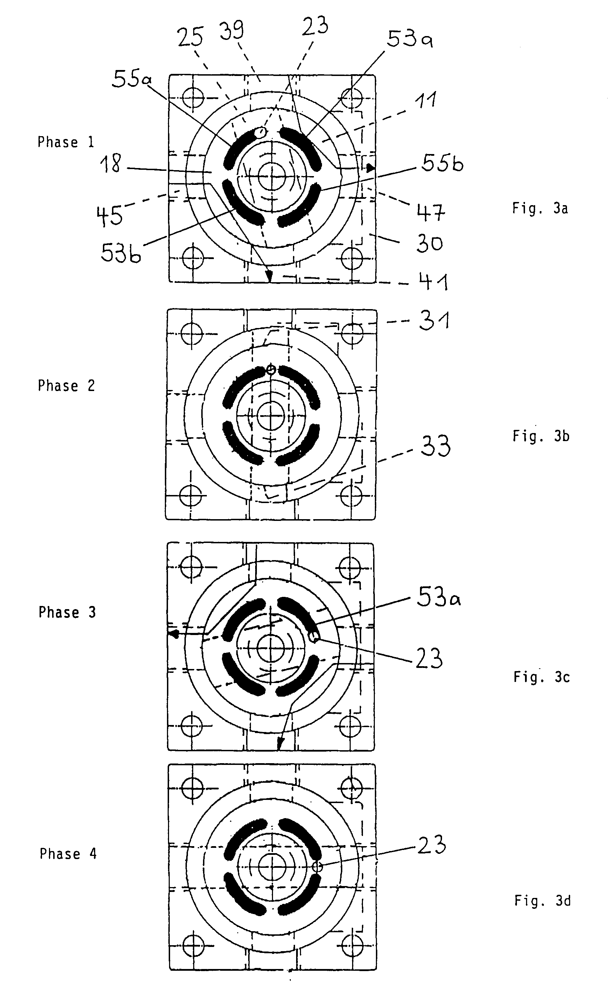

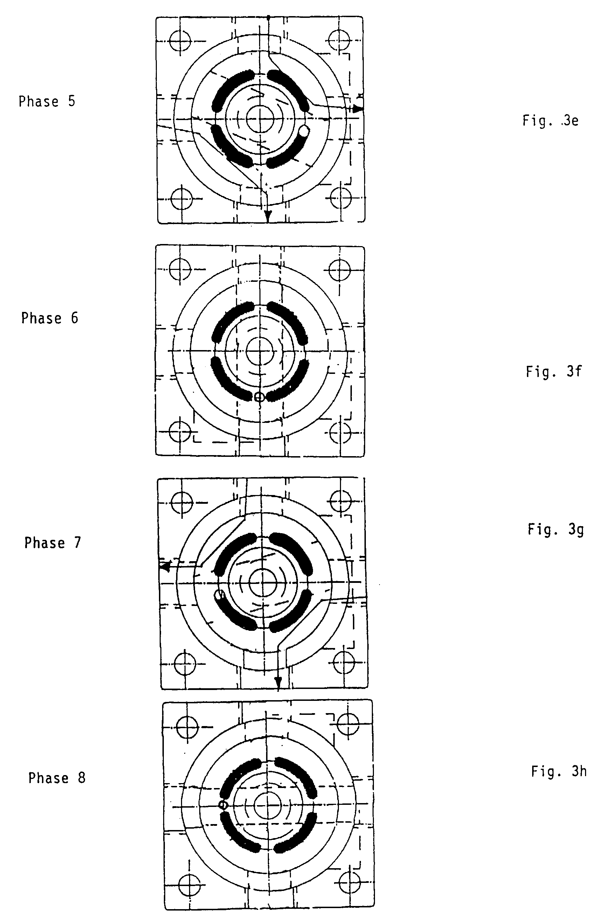

In den Fig. 3a bis 3h sind acht aufeinander folgende Arbeitsstellungen des Schieberkörpers 11 dargestellt, wobei die bisher vergebenen Bezugszeichen auch in diesen Figuren beibehalten worden sind. Die Fig. 3a bis 3h unterscheiden sich von den Fig. 2a bis 2d darin, daß nicht nur die Stellung des Schieberkörpers 11 zu der Gleitlagerbuchse 21 gezeigt ist, sondern zusätzlich auch die Stellung des Schieberkörpers 11 zu dem oberen Gleitlagerring 18. Die Ringbuchse 30 ist ebenfalls in den Fig. 3a bis 3h gezeigt. Der obere Gleitlagerring 18 hat jeweils zwei Paare sich axial gegenüberliegender, kreisbogenförmiger Nuten, wobei sämtliche Nuten auf einem gemeinsamen Teilkreis liegen. Der Radius des Teilkreises entspricht dem Abstand der Ausnehmung 23 von der Mittelachse der Aufnahmebohrung 79 des Schieberkörpers 11, so daß die Ausnehmung 23 je nach Stellung mit einer bestimmten Nut verbunden ist. Die Nuten 53a und 53b sind jeweils mit den beiden Sauerstoffauslaßöffnungen 53 im oberen Deckel 27 verbunden. Die Sauerstoffauslaßöffnungen 53 sind, was nicht explizit gezeigt ist, zu dem gemeinsamen Sauerstoffauslaßanschluß 54 zusammengefaßt. Die Nuten 55a und 55b, die sich wie die Nuten 53a und 53b diametral gegenüberliegen, sind mit den beiden Sauerstoffauslaßöffnungen 55 verbunden, die wiederum zu einem gemeinsamen Sauerstoffauslaßanschluß 54' zusammengefaßt sind. Der untere Gleitlagerring 19 entspricht dem oberen Gleitlagerring 18 in Form und Lage in dem Gehäuse 15, so daß die Nuten 53a, 53b, 55a und 55b axial gegenüberliegende entsprechende Nuten im unteren Gleitlagerring 19 haben und bei entsprechender Stellung der Ausnehmung 23 miteinander verbunden sind. Die Nuten in dem unteren Gleitlagerring 19 sind paarweise mit den Sauerstoffeinlaßöffnungen 49 oder den Sauerstoffauslaßöffnungen 51 verbunden. Darüber hinaus ist es auch möglich, den oberen und unteren Deckel 27, 29 lediglich mit zwei aneinander grenzenden Nuten auszubilden. Der Umfangsabstand der Nuten muß stets jedoch mindestens so groß wie die lichte Weite der Ausnehmung 23 des Schieberkörpers 11 sein, um zu vermeiden, daß die Ausnehmung 23 mit zwei Nuten gleichzeitig verbunden ist. Der Drehantrieb R ist in der in den Fig. 1 bis 3 gezeigten Ausführungsform über das Drehteil 87 mit dem Schieberkörper 11 verbunden.

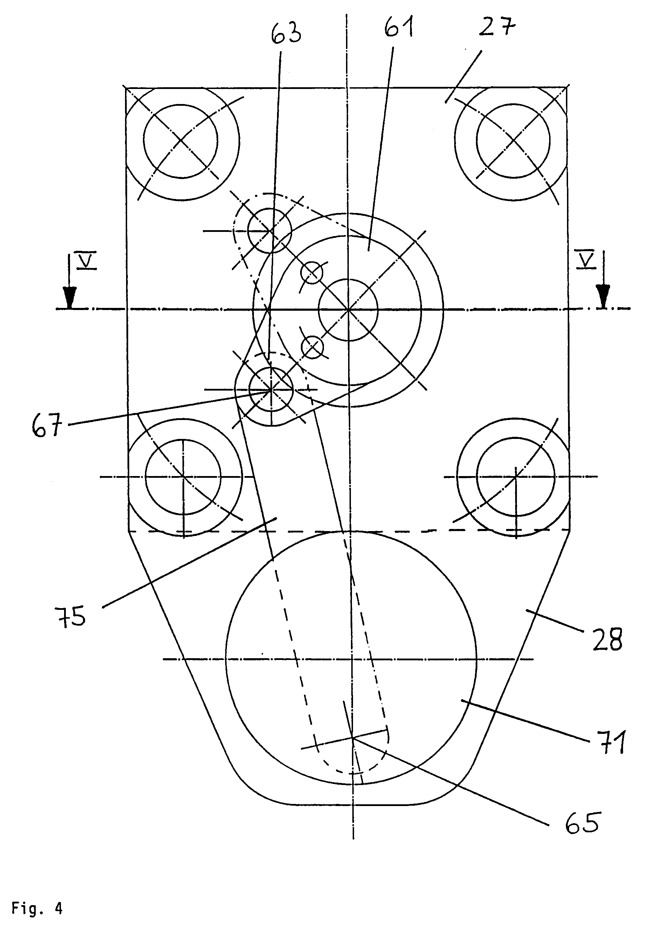

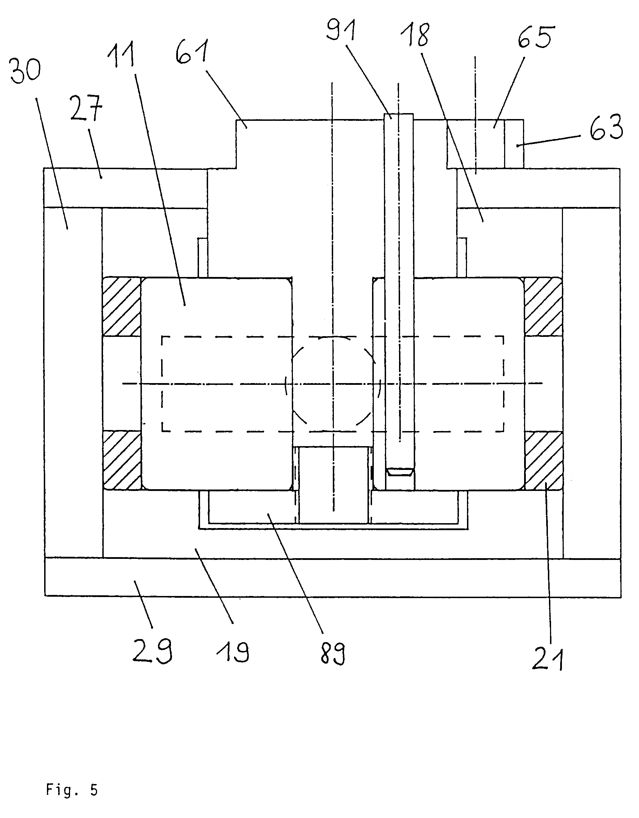

In der in den Fig. 4 und 5 gezeigten zweiten Ausführungsform ist der Drehantrieb R als Kurbeltrieb ausgebildet. Der obere Deckel 27 hat ein seitlich vorstehendes Seitenteil 28, auf dem der Drehantrieb R (in Fig. 4 nicht gezeigt) befestigt ist und eine Scheibe 71 in Drehung versetzt. Eine Kurbelstange 75 ist über einen Gelenkpunkt 65 drehbar, jedoch exzentrisch an der Scheibe 71 fixiert, wobei die Exzentrizität über eine nicht gezeigte Langlochbohrung in der Scheibe 71 einstellbar ist. Die Kurbelstange 75 ist weiter über den Gelenkpunkt 67 drehbar mit einem Drehteil 61, welches einen vorstehenden Kurbelteil 63 hat, verbunden. Der Kurbeltrieb versetzt den Schieberkörper 11 in eine reversierende 90°-Schwenkbewegung. Über die längenverstellbare Kurbelstange 75 ist der Winkel der Schwenkbewegung einstellbar, deren zwei Extremstellungen in Fig. 4 gezeigt sind.

In Fig. 5 ist die Verbindung zwischen dem Schieberkörper 11 und dem Drehteil 61 deutlicher zu erkennen, wobei die in Fig. 1 bis 3 verwendeten Bezugszahlen für entsprechende Teile in Fig. 5 übernommen wurden. Wie bereits erklärt, ist eine radiale Preßpassung zwischen dem Drehteil 61 und der zentrischen Aufnahmebohrung 79 nicht möglich, da der Schieberkörper 11 aus Keramik besteht. Die Befestigung des Schieberkörpers 11 an dem Drehteil 61 erfolgt deshalb auch in dieser Ausführungsform durch eine axiale Klemmung. Um eine zusätzliche Verdrehung zwischen dem Schieberkörper 11 und dem Drehteil 61 zu verhindern, ist ein Paßstift 91 vorgesehen, der in eine entsprechende Bohrung in dem Kurbelteil 63 eingreift. Der untere Gleitlagerring 19 hat im Gegensatz zu der in Fig. 1a gezeigten Ausführungsform keine durchgehende zentrische Bohrung, sondern lediglich eine Ausdrehung, was eine Abdichtung des Gleitlagerrings 19 gegenüber dem unteren Deckel 29 erleichtert.

Die Wirkungsweise der ersten Ausführungsform des Drehschiebers wird nun anhand der Fig. 1a bis 3h näher beschrieben. Je nach Stellung des Schieberkörpers 11 ergeben sich pro Umdrehung des Schieberkörpers 11 acht verschiedene, aufeinander folgende Arbeitsphasen. Phase 1 ist in den Fig. 2a und 3a gezeigt, der Schieberkörper 11 steht dabei so, daß Druckluft aus einer Druckluftquelle durch die Drucklufteinlaßöffnung 39 in die Ausnehmung 37 und weiter über die Druckluftauslaßöffnung 47 und die Leitung 101 in den zweiten Behälter 97 strömen kann. Ab einem bestimmten Druckwert im zweiten Behälter 97 beginnt eine sogenannte Adsorptionsphase im Behälter 97, in der der in der Luft vorhandene Stickstoff durch das Zeolith-Festbett adsorbiert wird. Der bestimmte Druckwert liegt normalerweise zwischen zwei und drei bar. Da die Luft nach Adsorption des Stickstoffs überwiegend aus Sauerstoff besteht, wird im folgenden zur Vereinfachung wiederum nur von Sauerstoff gesprochen. Der Sauerstoff verläßt den zweiten Behälter 97 an einem Behälterauslaß für Sauerstoff 105 und strömt über eine Leitung 109, den Sauerstoffeinlaßanschluß 50', die Sauerstoffeinlaßöffnung 51 in die Nuten im unteren Gleitlagerring 19, die den Nuten 55a und 55b im oberen Gleitlagerring 18 entsprechen. Wie in Fig. 3a zu erkennen ist, ist in Phase 1 die Ausnehmung 23 mit der Nut 55a verbunden, so daß der Sauerstoff über die Ausnehmung 23 durch den Schieberkörper 11 hindurch, über die Nut 55a, die Sauerstoffauslaßöffnung 55, den Sauerstoffauslaßanschluß 54' und die Leitung 115 in den Sauerstoffspeicher 111 strömen kann.

Der Drehantrieb R bewegt den Schieberkörper 11 zur Phase 2, in Fig. 2b und 3b gezeigt, weiter. In dieser Phase steht der Schieberkörper 11 so, daß die Steuerflächen 31 und 33 die Drucklufteinlaßöffnung 39 bzw. die Stickstoffauslaßöffnung 41 völlig verschließen, so daß keine Gasströme auftreten. Sobald der Schieberkörper 11 weiter gedreht wird, sind die Drucklufteinlaßöffnung 39 und die Stickstoffauslaßöffnung 41 nicht mehr vollständig geschlossen, und Phase 3 beginnt. In dieser Phase strömt die Druckluft über die Drucklufteinlaßöffnung 39 über die Ausnehmung 35, zur Druckluftauslaßöffnung 45 und über die Leitung 99 in den ersten Behälter 95 ein. Im ersten Behälter 95 beginnt damit die Adsorptionsphase. Der produzierte Sauerstoff verläßt den ersten Behälter 95 über den Behälterauslaß für Sauerstoff 103 und strömt über die Leitung 107, den Sauerstoffeinlaßanschluß 50 zur Sauerstoffeinlaßöffnung 49 und strömt in die Nuten im unteren Gleitlagerring 19, die den Nuten 53a und 53b im oberen Gleitlagerring 18 axial gegenüberliegen.

In der Phase 3 befindet sich die Ausnehmung 23 im Bereich der Nut 53a, wie in Fig. 3c zu sehen ist, so daß der Sauerstoff über die Ausnehmung 23, die Nut 53a, die Sauerstoffauslaßöffnung 53 zum Sauerstoffauslaßanschluß 54 und schließlich über die Leitung 113 in den Sauerstoffspeicher 111 strömt. Während im ersten Behälter 95 die gerade beschriebene Adsorptionsphase abläuft, läuft im zweiten Behälter 97 gleichzeitig eine Desorptionsphase ab. Am Ende der Adsorptionsphase des zweiten Behälters 97 (Phase 1) wurde durch den Drehschieber annähernd gleichzeitig die Druckluftzufuhr zum zweiten Behälter 97 und der Sauerstoffausstoß in Phase 2 unterbrochen. Damit stand der zweite Behälter 97 unter innerem Überdruck. In Phase 3 wird dieser Überdruck beim Öffnen der Stickstoffauslaßöffnung 41 schlagartig abgebaut. In Phase 3 sind der zweite Behälter 97 und dessen zugeordnete Druckluftauslaßöffnung 47 über die Ausnehmung 37 mit der Stickstoffauslaßöffnung 41 in Verbindung, so daß es zu einem Druckabfall kommt, bei dem sich die an das Zeolith-Festbett des Behälters 97 angelagerten Stickstoffmoleküle lösen. Der freiwerdende Stickstoff kann damit aus dem zweiten Behälter 97 und aus dem Drehschieber 10 ausströmen. Während dieser Desorptionsphase sperrt der Drehschieber 10 die Verbindung der Leitungen 115 und 109, so daß durch den plötzlichen Druckabfall kein Sauerstoff aus dem Sauerstoffspeicher 111 zurück in den Behälter 97 strömen kann. Bislang bekannte Rückschlagventile, die ein Rückströmen von Sauerstoff in Behälter verhindern, sind damit überflüssig.

In der Phase 4 hat der Schieberkörper 11 eine zweite Absperrstellung erreicht, in der die Steuerflächen 31 und 33 vollständig den Druckluftauslaßöffnungen 47 bzw. 45 zugewandt sind und diese verschließen, so daß eine Ruhephase eintritt.

Die Phase 5, die in Fig. 3e gezeigt ist, entspricht im wesentlichen der Phase 1. Der zweite Behälter 97 adsorbiert Stickstoff und produziert dadurch Sauerstoff, während der erste Behälter 95 desorbiert wird. Der produzierte Sauerstoff strömt jedoch nicht wie in Phase 1 über die Nut 55a und ihre entsprechende axial gegenüberliegende Nut, sondern über die Nut 55b und deren axial gegenüberliegende Nut in den Sauerstoffspeicher 111 ein.

Die Phasen 6, 7 und 8 entsprechen den bereits erläuterten Phasen 2, 3 bzw. 4.

In der Phase 6 ist der Schieberkörper 11 erneut in der ersten Absperrstellung. In der Phase 7 adsorbiert der erste Behälter 95 Stickstoff und produziert Sauerstoff, während der zweite Behälter 97 desorbiert wird und in der Phase 8 befindet sich der Schieberkörper 11 in der zweiten Absperrstellung.

Während einer vollen Umdrehung des Schieberkörpers 11 durchläuft jeder Behälter 95, 97 zwei Adsorptions-, zwei Desorptions- und vier Ruhephasen.

Um den Wirkungsgrad der mit dem Drehschieber 10 versehenen Anlage zur Sauerstoffanreicherung zu steigern, ist die in Fig. 1c dargestellte Variante möglich. In den Leitungen 99 und 101 zu den beiden Behältern 95 bzw. 97 befinden sich in der Nähe der beiden Durckluftauslaßöffnungen 45 und 47 zwei weitere Auslässe 201 bwz. 202. Die beiden Auslässe 201 und 202 sind über Unterdruckleitungen 210 bzw. 211 mit den beiden Behältern 95 bzw. 97 verbunden. Die Unterdruckleitungen 210 und 211 münden dabei in Bereiche der Behälter 95 bzw. 97, die in der Nähe der Behälterauslässe 103 bzw. 105 und möglichst weit entfernt von Einmündungen der Leitungen 99 und 101 in die Behälter 95 bzw. 97 angeordnet sind und die deshalb bei der Desorption benachteiligt sind.

In der Adsorptionsphase der Behälter 95 und 97 ist ein Druckluftstrom durch die Unterdruckleitung 210 bzw. 211 durch jeweils ein in diesen Unterdruckleitungen 210 und 211 angeordnetes Rückschlagventil 221 bzw. 222 unterbunden. In der Desorptionsphase der Behälter 95 und 97 entsteht durch die hohe Fließgeschwindigkeit des über die Leitung 99 bzw. 101 ausströmenden Stickstoffs nach dem Venturi-Prinzip in den Unterdruckleitungen 210 bzw. 211 ein relativer Unterdruck, der zu einer Desorption von Stickstoff in den ansonsten bei der Desorption benachteiligten Bereichen der Behälter 95 und 97 führt.

Durch diese verbesserte und vollständigere Desorption von Stickstoff kann auf Spülen mit einem Teil des produzierten Sauerstoffs während der Desorptionsphase verzichtet und der Ertrag an sauerstoffangereicherter Luft gesteigert werden.

Es ist denkbar, die Nuten 53a und 55a (vgl. Fig. 3a - 3d) sowie ihre axial gegenüberliegenden Nuten wegzulassen, wodurch sich eine verlängerte Ruhephase ergibt. Durch Änderung der Umfangslängen der Nuten oder der Änderung der Drehgeschwindigkeit des Drehantriebs R sind die verschiedenen Phasen zeitlich veränderbar.

Falls mehr als zwei Behälter wechselseitig arbeiten, sind entsprechend mehr Drucklufteinlaß-, Stickstoffauslaß-, Druckluftauslaß-, Stickstoffeinlaß- und Stickstoffauslaßöffnungen vorzusehen. Vorzugsweise sollte eine Drucklufteinlaßöffnung zwischen zwei Druckluftauslaßöffnungen sowie eine Stickstoffauslaßöffnung zwischen zwei Druckluftauslaßöffnungen angeordnet sein. Der Schieberkörper 11 könnte bei mehr als zwei Behältern auch ein sternförmig ausgebildetes Mittelteil 30 sowie mehrere Ausnehmungen 23 haben, welche mit Nuten auf verschiedenen Teilkreisdurchmessern verbunden sind.

In der in den Fig. 4 und 5 gezeigten Ausführungsform wird der Schieberkörper 11 nicht kontinuierlich gedreht, sondern durch den Kurbelantrieb lediglich reversierend um 90° zwischen zwei Extremstellungen, nämlich der Phase 1 (Fig. 2a, 3a) und Phase 3 (Fig. 2c, 3c) geschwenkt. Die Nuten 53b und 55b sowie ihre entsprechenden axial gegenüberliegenden Nuten sind in keiner Phase mit der Ausnehmung 23 verbunden und daher überflüssig. Die Ausbildung des Drehantriebs R als Kurbeltrieb ist dann vorteilhaft, wenn Spülphasen nicht nötig sind, d.h. wenn die Zeolith-Festbetten während der Desorptionsphase ausreichend desorbiert werden. Da beim Kurbeltrieb die Spülphase entfällt, dauern die Adsorptions- und Desorptionsphasen vorteilhafterweise länger, was zu einem höheren Ertrag an produziertem Sauerstoff führt.

Da der Drehschieber 10 für sämtliche auftretenden Gasströme separate Auslaß- und Einlaßöffnungen hat, steuert er die Gasströme unabhängig voneinander. Es kann damit auch nicht vorkommen, daß in die sauerstoffführenden Leitungen 107, 109, 113 und 115 desorbierter Stickstoff eintritt, was die Reinheit des produzierten Sauerstoffs verringen würde.

## Patentansprüche

1. Drehschieber zum Steuern von Druckluft-, Stickstoff- und Sauerstoffströmen, mit
a) einem Gehäuse (15) mit zumindest einer Drucklufteinlaßöffnung (39),
zumindest zwei Druckluftauslaßöffnungen (45, 47), die auch als Stickstoffeinlaßöffnungen dienen,
zumindest einer Stickstoffauslaßöffnung (41) und Sauerstoffströmungsöffnungen (49, 51, 53, 55),
b) einem im Gehäuse (15) drehbar angeordneten Schieberkörper (11) mit Ausnehmungen an der Mantelfläche zum Steuern von Gasströmen,
c) einem mit dem Schieberkörper (11) verbundenen Drehantrieb (R), und
d) einer Ausnehmung (23) zum Leiten von Sauerstoff im Schieberkörper (11), über die die Sauerstoffströmungsöffnungen miteinander verbindbar sind,
**dadurch gekennzeichnet,** daß die Sauerstoffströmungsöffnungen wenigstens zwei ausschließlich als Sauerstoffeinlaßöffnungen dienende Öffnungen (49, 51) und wenigstens zwei diesen zugeordnete, ausschließlich als Sauerstoffauslaßöffnungen dienende Öffnungen (53, 55) umfassen, wobei die Sauerstoffeinlaßöffnungen (49, 51) und die Sauerstoffauslaßöffnungen (53, 55) jeweils in axial gegenüberliegenden stirnseitigen Gehäuseteilen einander paarweise gegenüberliegend angeordnet sind, so daß jede Sauerstoffeinlaßöffnung durch die Ausnehmung (23) zum Leiten von Sauerstoff mit der ihr zugeordneten, axial gegenüberliegenden Sauerstoffauslaßöffnung (53, 55) verbindbar ist, und
daß die Drucklufteinlaßöffnung (39) und die Stickstoffauslaßöffnung (41) einerseits und die Druckluftauslaßöffnungen (45, 47) andererseits ausschließlich als radiale, sich diametral gegenüberliegende Bohrungen ausgebildet sind, die mit an der Mantelfläche des Schieberkörpers (11) vorhandenen, diametral gegenüberliegenden Steuerflächen (31, 33) und Ausnehmungen zusammenwirken.

2. Drehschieber nach Anspruch 1, dadurch gekennzeichnet, daß die Ausnehmung (23) zum Leiten von Sauerstoff eine axiale Bohrung ist.

3. Drehschieber nach Anspruch 1 oder 2, dadurch gekennzeichnet, daß die Drucklufteinlaßöffnung (39) und die Stickstoffauslaßöffnung (41) winkelversetzt zu den Druckluftauslaßöffnungen (45, 47) angeordnet sind.

4. Drehschieber nach Anspruch 1 oder 2, dadurch gekennzeichnet, daß die winkelversetzung 90° beträgt.

5. Drehschieber nach einem der Ansprüche 2 bis 4, dadurch gekennzeichnet, daß die Drucklufteinlaßöffnung (39) und die Stickstoffauslaßöffnung (41) jeweils kleiner als die Druckluftauslaßöffnungen (45, 47) sind und daß die Steuerflächen (31, 33) so groß ausgebildet sind, daß in einer ersten Absperrstellung die Drucklufteinlaßöffnung und die Stickstoffauslaßöffnung (39, 41) und in einer zweiten Absperrstellung die Druckluftauslaßöffnungen (45, 47) zur Drucklufteinlaß- und Stickstoffauslaßöffnung (39, 41) hin jeweils vollständig durch den Schieberkörper (11) verschließbar sind.

6. Drehschieber nach Anspruch 5, dadurch gekennzeichnet, daß der Drehantrieb (R) als Kurbeltrieb ausgebildet ist, dessen Kurbelstange (75) so mit dem Schieberkörper (11) verbunden ist, daß letzterer nur in einem Bereich drehbar ist, in dem die zweite Absperrstellung nicht erreicht wird.

7. Drehschieber nach Anspruch 6, dadurch gekennzeichnet, daß sowohl die Größe des Drehbereiches als auch die Drehlage des Schieberkörpers (11) in bezug auf den Kurbeltrieb einstellbar sind.

8. Drehschieber nach Anspruch 7, dadurch gekennzeichnet, daß zur Einstellung des Bereichs und der Drehlage des Schieberkörpers (11) der Kurbeltrieb verstellbare Gelenkpunkte (65, 67) hat.

9. Drehschieber nach einem der Ansprüche 1 bis 8, dadurch gekennzeichnet, daß die Sauerstoffeinlaßöffnungen (49, 51) und die Sauerstoffauslaßöffnungen (53, 55) jeweils als sich axial gegenüberliegende, kreisbogenförmige Nuten in den axial gegenüberliegenden Gehäuseteilen ausgebildet sind.

10. Drehschieber nach Anspruch 9, dadurch gekennzeichnet, daß die Nuten jeweils auf einem gemeinsamen Teilkreis liegen.

11. Drehschieber nach Anspruch 10, dadurch gekennzeichnet, daß die in einem gemeinsamen Gehäuseteil ausgebildeten Nuten paarweise diametral gegenüberliegend angeordnet sind.

12. Drehschieber nach einem der Ansprüche 9 bis 11, dadurch gekennzeichnet, daß die Nuten jedes Gehäuseteils einen Umfangsabstand voneinander haben, der mindestens so groß wie die lichte Weite der Ausnehmung (23) zum Leiten von Sauerstoff des Schieberkörpers (11) ist.

13. Drehschieber nach einem der Ansprüche 1 bis 12, dadurch gekennzeichnet, daß das Gehäuse (15) aus einem Außen- und einem Innengehäuse (16, 17) besteht und daß das Innengehäuse (17) aus einem oberen und einem unteren Gleitlagerring (18, 19) sowie aus einer Gleitlagerbuchse (21) besteht.

14. Drehschieber nach Anspruch 13, dadurch gekennzeichnet, daß das Innengehäuse (17) und der Schieberkörper (11) aus keramischem Material bestehen.

15. Drehschieber nach Anspruch 13 oder 14, dadurch gekennzeichnet, daß zwischen dem Außen- und dem Innengehäuse (16, 17) eine elastische Dichtung (57) vorgesehen ist.

16. Verwendung des Drehschiebers nach einem der Ansprüche 1 bis 15 in einer Anlage zur sauerstoffanreicherung von Luft durch selektive Adsorption von Luftbestandteilen, mit zumindest zwei wechselweise arbeitenden, mit Adsorptionsmitteln gefüllten Behältern (95, 97) und mit einem Sauerstoffspeicher (111), wobei der Drehschieber so mit der Anlage verbunden ist, daß
a) die Drucklufteinlaßöffnung (39) mit einer Druckluftquelle verbunden ist,
b) die Druckluftauslaßöffnungen (45, 47) jeweils mit einem Behälter (95, 97) verbunden sind,
c) jeder Behälter (95, 97) einen Behälterauslaß (103, 105) besitzt, der mit einer der als Sauerstoffeinlaßöffnungen dienenden Öffnungen (49, 51) verbunden ist,
dadurch gekennzeichnet, daß die Öffnungen (49, 51), die ausschließlich als Sauerstoffeinlaßöffnungen dienen, mit den Behälterauslässen (103, 105) verbunden sind, und daß die Öffnungen (53, 55), die ausschließlich als Sauerstoffauslaßöffnungen dienen, mit dem Sauerstoffspeicher (111) verbunden sind.

17. Verwendung des Drehschiebers nach Anspruch 16, dadurch gekennzeichnet, daß für jeden Behälter (95, 97) eine Unterdruckleitung (210, 211) vorgesehen ist die an einem Ende in der Nähe der Druckluftauslaßöffnungen (45, 47) in Leitungen (99, 101) münden, welche die Druckluftauslaßöffnungen (45, 47) mit den Behältern (95, 97) verbinden, und am anderen Ende in Bereichen in die Behälter (95, 97) münden, welche von den Einmündungen der Leitungen (99, 101) in die Behälter (95, 97) weit entfernt sind, und daß in jeder Unterdruckleitung (210, 211) zumindest ein Rückschlagventil (221, 222) angeordnet ist.

## Claims

1. A rotary slide valve for controlling compressed air, nitrogen and oxygen flows, having
a) a housing (15) with at least one compressed air inlet opening (39)
at least two compressed air outlet openings (45, 47), which also serve as nitrogen inlet openings,
at least one nitrogen outlet opening (41) and oxygen flow openings (49, 51, 53, 55),
b) a slide valve body (11) positioned rotatably within the housing (15) having recesses in the (Mantel) surface for controlling gas flows,
c) a rotary drive (R) connected to the slide valve body (11), and
d) a recess (23) for conducting oxygen in the slide valve body (11) through which the oxygen flow openings are connectable to each other,
characterized in that the oxygen flow openings include at least two openings (49, 51) serving exclusively as oxygen inlet openings and at least two openings (53, 55) associated with same serving exclusively as oxygen outlet openings, the oxygen inlet openings (49, 51) and the oxygen outlet openings (53, 55) are located respectively in axially opposed head end housing portions in opposed pairs, so that each oxygen inlet opening is adapted to be connected for conducting oxygen via the recess (23) to its associated, axially opposed oxygen outlet opening (53, 55), and
that the compressed air inlet opening (39) and the nitrogen outlet opening (41), on the one hand, and the compressed air outlet openings (45, 47), on the other hand, are formed exclusively as radial, diametrically opposed bores, which cooperate with the diametrically opposed control surfaces (31, 33) and recesses provided on the (Mantel) surface of the rotary slide valve body (11).

2. A rotary slide valve according to claim 1 characterized in that the recess (23) for conducting oxygen is an axial bore.

3. A rotary slide valve according to claim 1 or 2 characterized in that the compressed air inlet opening (39) and the nitrogen outlet opening (41) are angularly displaced relative to the compressed air outlet openings (45, 47).

4. A rotary slide valve according to claim 1 or 2, characterized in that the angular displacement amounts to 90°.

5. A rotary slide valve according to any one of claims 2 to 4, characterized in that the compressed air inlet opening (39) and the nitrogen outlet opening (41) are each smaller than the compressed air outlet openings (45, 47) and that the control surfaces (31, 33) are made so large that, in a first closed-off position, the compressed air inlet opening and the nitrogen outlet opening (39, 41) and, in a second closed-off position, the compressed air outlet openings (45, 47) are each adapted to be completely closed off from the compressed air inlet and nitrogen outlet opening (39, 41) by means of the slide valve body (11).

6. A rotary slide valve according to claim 5, characterized in that the rotary drive (R) takes the form of a crank drive whose connecting rod (75) is so connected to the slide valve body (11) that the latter is rotatable only within a range in which the second closed off position is not reached.

7. A rotary slide valve according to claim 6 characterized in that both the magnitude of the range of rotation as well as the rotary position of the slide valve body (11) is adjustable relative to the crank drive.

8. A rotary slide valve according to claim 7, characterized in that the crank drive has adjustable hinge points (65, 67) for adjusting the range and the rotational position of the slide valve body (11).

9. A rotary slide valve according to any one of claims 1 to 8, characterized in that the oxygen inlet openings (49, 51) and the oxygen outlet openings (53, 55) take the form respectively of axially opposed circularly curved grooves in the axially opposed housing portions.

10. A rotary slide valve according to claim 9, characterized in that the respective grooves are located in a common arc of a circle.

11. A rotary slide valve according to claim 10, characterized in that the grooves formed in a common portion of the housing are arranged in pairs and diametrically opposed.

12. A rotary slide valve according to any one of claims 9 to 11, characterized in that the grooves in each housing portion have a circumferential spacing from each other which is at least as great as the width of recess (23) in the slide valve body (11) for conducting oxygen.

13. A rotary slide valve according to any one of claims 1 to 12, characterized in that the housing (15) consists of an outer and inner housing (16, 17) and the inner housing (17) consists of an upper and lower slide bearing sleeve (18, 19) as well as a slide bearing bushing (21).

14. A rotary slide valve according to claim 13, characterized in that the inner housing (17) and the slide valve body (11) are made of ceramic material.

15. A rotary slide valve according to claim 13 or 14, characterized in that an elastic seal (57) is provided between the outer and the inner housing (16, 17).

16. The use of the rotary slide valve according to any one of claims 1 to 15 in a system for the oxygen enrichment of air through selective adsorption of air components, having at least two containers (95, 97) which operate alternately, filled with adsorption material and having an oxygen storage vessel (111), the rotary slide valve being so connected to the system that
a) the compressed air inlet opening (39) is connected to a source of compressed air,
b) the compressed air outlet openings (45, 47) are connected respectively to a container (95, 97),
c) each container (95, 97) has a container outlet (103, 105) which is connected to one of the oxygen openings (49, 51),
characterized in that the openings (49, 51) which serve exclusively as oxygen inlet openings are connected to the container outlets (103, 105) and the openings (53, 55) which serve exclusively as oxygen outlet openings are connected to the oxygen storage vessel (111).

17. The use of the rotary slide valve according to claim 16
characterized in that, for each container (95, 97) there is provided a low pressure duct (210, 211) which opens at one end near the compressed air outlet openings (45, 47) into the ducts (99, 101) that connect the compressed air outlet openings (45, 47) to the containers (95, 97) and at the other end opens into the containers (95, 97) at locations which are far removed from the openings of the ducts (99, 101) into the containers (95, 97), and at least one check valve (221, 222) is located in each low pressure duct (210, 211).

## Revendications

1. Tiroir rotatif pour commander des courants gazeux d'air comprimé, d'azote et d'oxygène, comportant :
a) un boîtier (15) équipé d'au moins un orifice (39) d'entrée d'air comprimé, d'au moins deux orifices (45, 47) de sortie d'air comprimé servant également d'orifices d'entrée d'azote, d'au moins un orifice (41) de sortie d'azote et des orifices (43, 51, 53, 55) d'écoulement d'oxygène,
b) un corps (11) de tiroir, tournant dans le boitier (15) et présentant à sa surface des évidements de commande du flux gazeux,
c) un entraînement en rotation (R) relie au corps (11) du tiroir,
d) un évidement (23) qui conduit l'oxygène dans le corps (11) et peut assurer la liaison entre les divers orifices d'écoulement de l'oxygène,
caractérisé en ce que
- les orifices d'écoulement de l'oxygène comprennent au moins deux orifices (49, 51) servant exclusivement à l'entrée de l'oxygène et au moins deux orifices (53, 55) associés aux précédents et servant exclusivement à la sortie de l'oxygène
- les orifices (49, 51) et les orifices (53, 55) sont disposés par paires d'orifices opposés situés chacun dans des parties frontales du boîtier axialement opposées, de sorte que chaque orifice de sortie d'oxygène peut être relié à l'orifice de sortie d'oxygène (53, 55) qui lui est axialement opposé, par l'évidement (23) pour conduire l'oxygène
- l'orifice d'entrée d'air comprimé (39) et l'orifice de sortie d'azote (41) d'une part, les orifices de sortie d'air comprimé (45, 47) d'autre part sont constitués exclusivement de perçages radiaux, diamétralement opposés, coopérant avec des portées de commande (31, 33) diamétralement opposées existant sur l'enveloppe du tiroir rotatif (11) et avec des évidements.

2. Tiroir rotatif selon la revendication 1,
caractérisé en ce que
l'évidement (23) servant à conduire l'oxygène est un alésage axial.

3. Tiroir rotatif selon la revendication 1 ou 2,
caractérisé en ce que
l'orifice d'entrée d'air comprimé (39) et l'orifice de sortie d'azote (41) sont décalés angulairement par rapport aux orifices de sortie d'air comprimé (45, 47).

4. Tiroir rotatif selon la revendication 1 ou 2,
caractérisé en ce que
le décalage angulaire est de 90°.

5. Tiroir rotatif selon une des revendications 2 à 4,
caractérisé en ce que
l'orifice d'entrée d'air comprimé (39) et l'orifice de sortie d'azote (41) sont tous deux plus petits que les orifices de sortie d'air comprimé (45, 47) et les portées de commande (31, 33) ont des dimensions telles que, dans une première position d'obturation l'orifice d'entrée d'air comprimé et l'orifice de sortie d'azote (39, 41), dans une seconde position d'obturation, les orifices de sortie d'air comprimé (45, 47) conduisant aux orifices précédents (39, 41), peuvent être obturés complètement par le corps (11) du tiroir.

6. Tiroir rotatif selon la revendication 5,
caractérisé en ce que
l'entraînement de rotation (R) est un système à manivelle dont la bielle (75) est reliée au corps (11) du tiroir de manière que ce corps (11) ne puisse tourner qu'à l'intérieur d'une certaine plage où la position d'obturation n'est pas atteinte.

7. Tiroir rotatif selon la revendication 6,
caractérisé en ce que
la dimension de la plage de rotation ainsi que la position de rotation du corps (11) du tiroir peuvent être réglées par rapport au système à manivelle.

8. Tiroir rotatif selon la revendication 7,
caractérisé en ce que
pour régler la plage et la position de rotation du corps (11), le système à manivelle présente des points d'articulation réglables (65, 67).

9. Tiroir rotatif selon une des revendications 1 à 8,
caractérisé en ce que
les orifices d'entrée d'oxygène (49, 51) et les orifices de sortie d'oxygène (53, 55) sont constitués chacun de rainures axialement opposées, en forme d'arc de cercle, situées dans des parties axialement opposées du boîtier.

10. Tiroir rotatif selon la revendication 9,
caractérisé en ce que
les rainures sont disposées sur un cercle primitif commun.

11. Tiroir rotatif selon la revendication 10,
caractérisé en ce que
les rainures situées sur une partie commune du boîtier sont réparties en paires d'éléments opposés diamétralement.

12. Tiroir rotatif selon une des revendications 9 à 11,
caractérisé en ce que
les rainures de chaque partie de boîtier présentent entre elles un espacement périphérique au moins égal au passage libre qu'offre l'évidement (23) à la circulation de l'oxygène dans le tiroir rotatif (11).

13. Tiroir rotatif selon une des revendications 1 à 12,
caractérisé en ce que
le boîtier (15) est composé d'un boîtier externe et d'un boitier interne (16, 17), ce dernier étant formé d'un anneau supérieur et d'un anneau inférieur de palier glissant (18, 19) encadrant une douille de palier glissant (21).

14. Tiroir rotatif selon la revendication 13,
caractérisé en ce que
le boîtier interne (17) et le corps de tiroir (11) sont constitués d'un matériau céramique.

15. Tiroir rotatif selon la revendication 13 ou 14,
caractérisé en ce qu'
un joint élastique d'étanchéité (57) est prévu entre le boîtier externe et le boitier interne (16, 17).

16. Utilisation du tiroir rotatif selon une des revendications 1 à 15 dans une installation d'enrichissement d'air en oxygène par adsorption sélective de constituants de l'air, comportant au moins deux réservoirs (95, 97) fonctionnant en alternance et remplis de moyens d'adsorption, ainsi qu'un réservoir d'accumulation d'oxygène (111), le tiroir rotatif étant relié à l'installation de manière que :
a) l'orifice d'entrée d'air (39) soit relié à une source d'air comprimé
b) les orifices de sortie d'air comprimé (45, 47) soient reliés chacun à un réservoir (95, 97)
c) chaque réservoir (95, 97) possède une sortie (103, 105) reliée à un des orifices (49, 51) servant de sortie d'oxygène
caractérisée en ce que
les orifices (49, 51), servant exclusivement à la sortie d'oxygène, sont reliés aux sorties (103, 105) des réservoirs (95, 97) tandis que les orifices (53, 55), servant exclusivement à la sortie d'oxygène, sont reliés au réservoir d'accumulation d'oxygène (111).

17. Utilisation du tiroir rotatif selon la revendication 16,
caractérisé en ce que
chaque réservoir (95, 97) est équipé d'une canalisation de dépression (210, 211) qui débouche par une extrémité, près des orifices de sortie d'air comprimé (45, 47), dans des conduites (99, 101) qui relient les orifices de sortie d'air comprimé (45, 47) aux réservoirs (95, 97) tandis qu'elle débouche par l'autre extrémité dans des zones des réservoirs (95, 97) éloignées des embouchures des conduites (99, 101) dans ces réservoirs, chaque canalisation de dépression étant équipée d'une soupape antiretour (221, 222).
